# DEMANDE DE BREVET EUROPEEN

(11) **EP 1 118 483 A1**
(43) Date de publication de la demande: **25.07.2001**
(21) Numéro de dépôt: 00118737.6
(22) Date de dépôt: 30.08.2000
(51) Int. Cl.: B60H 3/06

(54) **Elimination de polluants organiques dans l'habitacle d'un vèhicule par photocatalyse**

(30) Priorité: 01.09.1999 FR 9910964
(71) Demandeur: VALEO CLIMATISATION, 78321 La Verrière (FR)
(72) Inventeur: Foury, Guillaume, 78990 Elancourt (FR); Guillemin, Jean, 61340 St Agnan S/Erre (FR); Lemaitre, Nathalie, 78220 Viroflay (FR)

(57) **Abrégé**

Le procédé concerne l'élimination de polluants organiques dans l'habitacle d'un véhicule par photocatalyse. La face supérieure du tableau de bord (1) est recouverte d'une couche (10) de photocatalyseur. Cette paroi supérieure comporte une pluralité d'orifices (7) assurant une aération diffuse. La face inférieure du tableau de bord (1) comporte également une couche (11) de photocatalyseur irradié par une source (8) de rayons ultra-violets disposée dans une chambre de diffusion.

## Description

L'invention se rapporte à l'élimination des polluants organiques dans l'air d'un habitacle de véhicule automobile, ce véhicule étant équipé d'une installation de chauffage, aération et/ou climatisation disposée sous la planche de bord.

On connaît par EP 0 798 143 des appareils de filtration de gaz toxiques ou polluants pour habitacle de véhicule qui utilisent la photocatalyse comme principe actif. Le photocatalyseur est déposé sous forme de poudre sur un média fibreux. La source d'ultra violets est constituée d'une lampe située à proximité du média afin d'obtenir une irradiation optimale. Cet appareil est autonome et est placée de préférence sur la plage arrière du véhicule. L'air à traiter est mis en mouvement par un pulseur intégré dans l'appareil et traverse le média irradié. L'air assaini est renvoyé dans l'habitacle. Pendant les périodes de réactivation du photocatalyseur, les gaz pollués sont dirigés vers le filtre à air du moteur afin d'être brûlés dans le moteur. Cet appareil nécessite donc l'installation d'un conduit pour envoyer les gaz pollués vers le moteur.

WO 96/37 280 prévoit également l'utilisation d'une couche de photocatalyseur irradié par des U.V naturels ou artificiels pour éliminer les polluants organiques dans l'habitacle du véhicule. Dans le cas de l'utilisation des U.V naturels, ce document prévoit de recouvrir la face interne du pare-brise par une mince couche de photocatalyseur. Ce document suggère également de recouvrir des éléments du système de ventilation, notamment les ailettes du pulseur, d'une couche de photocatalyseur qui sont alors irradiés par une lampe émettant dans la gamme des ultra-violets.

L'utilisation des pare-brises comme support de la couche de photocatalyseur, oblige à déposer une couche de photocatalyseur qui soit suffisamment fine et homogène afin de ne pas perturber la vision du conducteur du véhicule. Ceci entraîne un processus de fabrication délicat et coûteux.

Le but de l'invention est de proposer un procédé d'élimination des polluants dans un habitacle de véhicule qui soit facile à mettre en oeuvre et peu coûteux.

L'invention concerne donc un procédé pour purifier l'air de l'habitacle d'un véhicule automobile équipé d'une installation de chauffage, aération et/ou climatisation disposée sous la planche de bord, procédé selon lequel on irradie un photocatalyseur déposé sur un support par des rayons lumineux.

Le procédé selon l'invention est caractérisé par le fait qu'on utilise au moins une partie des garnitures intérieures de l'habitacle comme support du photocatalyseur.

Avantageusement on utilise la planche de bord comme support du photocatalyseur.

Avantageusement on recouvre au moins la face externe de la planche de bord, qui est visible de l'habitacle, d'une couche de photocatalyseur, cette couche étant irradiée au moins par des rayons ultra-violets ou visibles naturels.

Selon une autre caractéristique de l'invention, on prévoit une installation susceptible de délivrer un débit d'air d'aération à travers une chambre de diffusion disposée sous la planche de bord et communiquant avec l'habitacle par une pluralité d'orifices ménagés dans la paroi de la planche de bord.

Ainsi l'air d'aération sort à petite vitesse de la planche de bord, et lèche sa surface externe qui est recouverte de photocatalyseur et irradiée par les ultra-violets ou visibles naturels traversant le pare-brise.

Selon une autre caractéristique avantageuse de l'invention on recouvre la face interne de la planche de bord, qui est située dans la chambre de diffusion, d'une couche de photocatalyseur que l'on irradie avec une source de rayons ultra-violets disposée dans ladite chambre de diffusion et on prévoit des moyens pour masquer les orifices de la paroi de la planche de bord de l'émission des ultra-violets de la source.

Selon un premier mode de réalisation les moyens de masquage comportent une paroi supplémentaire formant chicane dans la chambre de diffusion, et recouverte d'une couche de photocatalyseur irradiée par les ultra-violets de la source.

Cette paroi peut comporter des ouvertures décalées par rapport aux orifices de la planche de bord.

Selon un deuxième mode de réalisation, la planche de bord comporte une pluralité d'ailettes fixes recouvertes sur leurs deux faces d'une couche de photocatalyseur et orientées de manière à masquer les sorties d'air de l'émission des rayons ultra-violets de la source.

D'autres avantages et caractéristiques de l'invention" ressortiront à la lecture de la description suivante faite à titre d'exemple et en référence aux dessins annexés dans lesquels :
la figure 1 est une vue en élévation de la partie avant de l'habitacle d'un véhicule qui comporte une planche de bord au-dessus d'une installation de climatisation, cette planche de bord étant équipée de bouches d'aération frontales ;
la figure 2 est une vue en élévation de la partie avant de l'habitacle d'un véhicule qui comporte au-dessus de l'installation de climatisation une planche de bord multiperforée permettant une aération diffuse ;
la figure 3 est une coupe selon le plan vertical médian de la partie avant de l'habitacle selon la figure 2 ;
la figure 4 est une coupe selon le plan vertical médian de la planche de bord et de la chambre de diffusion équipée d'une source de rayons ultra-violets et d'une paroi intermédiaire masquant les orifices de la planche de bord de l'émission des rayons ultra-violets ;
la figure 5 montre une variante de réalisation des moyens de masquage des orifices de la planche de bord, et
la figure 6 est une coupe selon le plan vertical médian d'une planche de bord équipée d'une pluralité d'ailettes assurant l'aération diffuse.

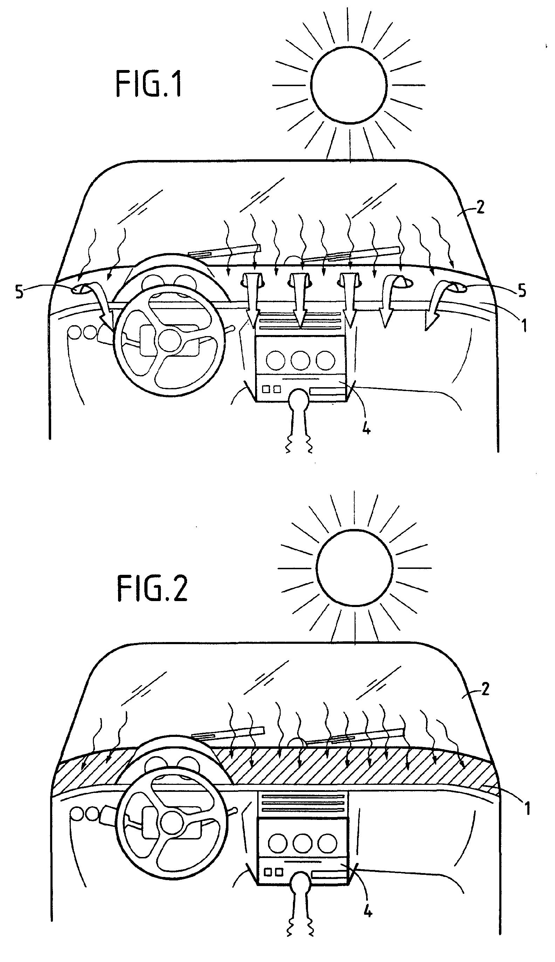

Sur les figures 1 à 3 on a représenté par la référence 1 la planche de bord d'un véhicule disposée immédiatement derrière le pare-brise 2. Cette planche de bord 1 coiffe une installation de chauffage, aération et/ou climatisation 3 disposée dans la partie centrale du véhicule à l'avant d'une console 4. La planche de bord 1, réalisée de préférence dans un matériau plastique, se présente globalement sous la forme d'un profilé en L qui présente une paroi supérieure 1a éclairée par les rayons lumineux traversant le pare brise 2 et une paroi arrière 1b sensiblement verticale.

Selon la présente invention au moins la face supérieure de la paroi supérieure 1a est recouverte d'une couche 10 de photocatalyseur, de préférence du dioxyde de titane TiO₂, qui est irradiée par les rayons ultra-violets ou visibles naturels traversant le pare-brise 2. Cette couche 10 de photocatalyseur peut également être en outre irradiée par des rayons ultra-violets artificiels émis par une source d'appoint.

La figure 1 montre une paroi arrière 1b équipée de bouches d'aération 5 qui délivrent à une vitesse relativement élevée l'air d'aération délivré par l'installation 3. Cette vitesse de sortie de l'air d'aération crée des turbulences dans l'habitacle, et la face supérieure de la paroi supérieure 1a est balayée par l'air ambiant. Les molécules organiques contenues dans l'air ambiant sont alors détruites, par suite de l'activation du photocalyseur, notamment par les rayons ultra-violets naturels ou artificiels, lors de leur contact avec les particules de TiO₂.

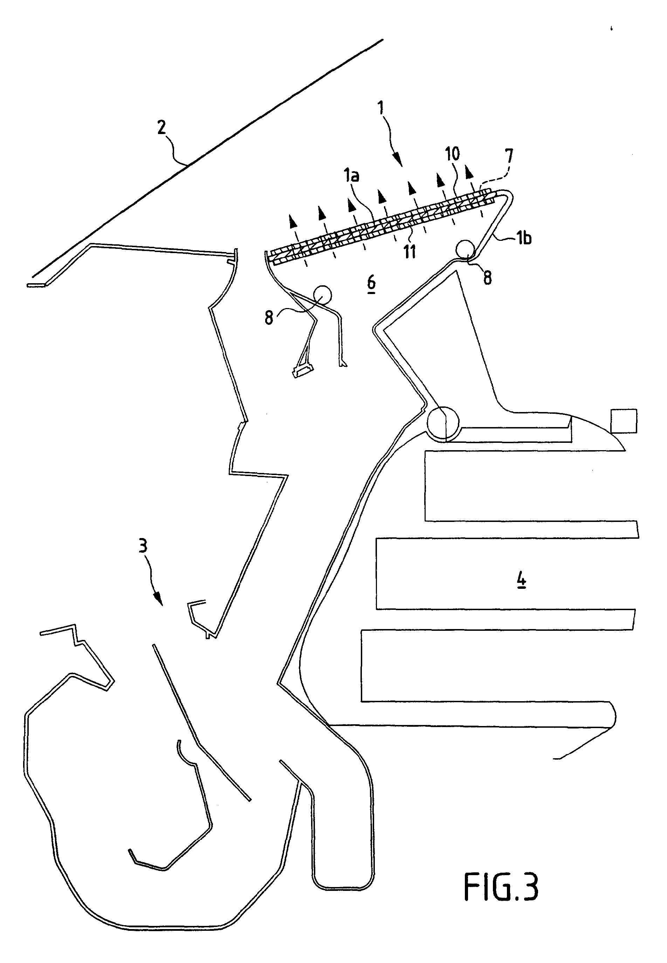

Afin de favoriser la destruction des molécules organiques contenues dans l'air d'aération délivré par l'installation 3, ainsi que cela est montré sur les figures 2 et 3, la planche de bord 1 coiffe, de préférence, une chambre de diffusion 6 qui reçoit de l'air d'aération de l'installation 3, et au moins la paroi supérieure 1a est équipée d'une pluralité d'orifices 7 de sorties d'air d'aération. La chambre de diffusion 6 s'étend sur toute la largeur de la planche de bord 1. Les orifices 7 peuvent être réalisés sous la forme d'une multiperforation ou sous la forme d'une pluralité de fentes parallèles, qui présentent globalement une surface de sortie d'air relativement élevée. Cette technique, connue sous le nom d'aération diffuse ou d'aération douce, imprime à l'air d'aération une vitesse relativement lente. L'air d'aération délivré dans l'habitacle lèche d'abord la surface supérieure de la paroi supérieure 1a et est purifié dès son entrée dans l'habitacle par photocatalyse des molécules organiques.

Selon une autre caractéristique de l'invention, au moins une lampe 8 de rayons ultra-violets est installée dans la chambre de diffusion 6. Cette lampe 8 irradie la face inférieure de la paroi supérieure 1a, qui dans ce cas est également recouverte d'une couche 11 de photocatalyseur.

Pour éviter que des rayons ultra-violets émis par la lampe 8, ne diffusent à travers les orifices 7 de la paroi supérieure 1a de la planche de bord 1, ce qui pourrait être gênant voire dangereux la nuit par suite de la réflexion dans le pare brise 2, il est prévu des moyens pour masquer les orifices 7.

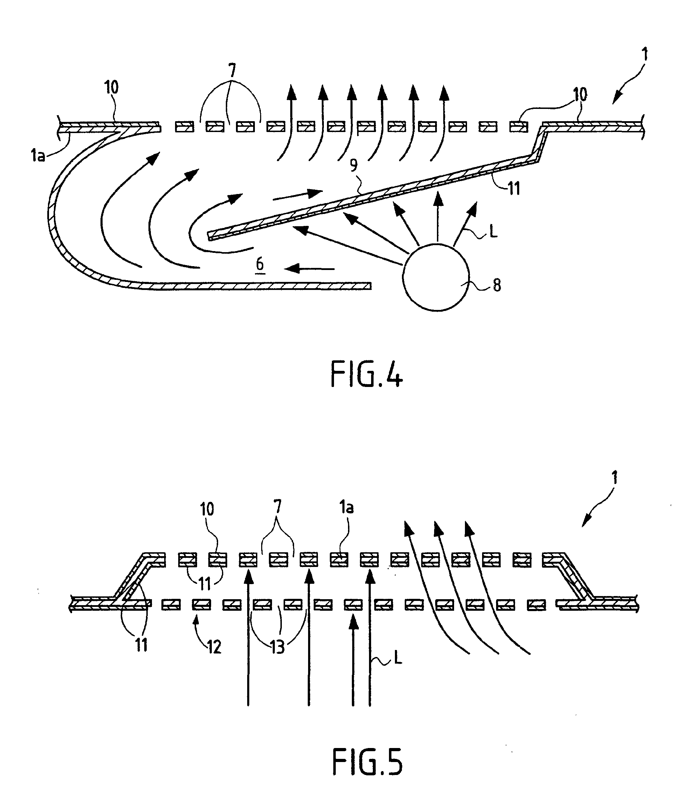

Ainsi que cela est montré sur la figure 4, les moyens de masquage peuvent être formés par une paroi intermédiaire 9 qui loge dans la chambre de diffusion 6 et qui constitue une chicane contournée par l'air d'aération. La paroi intermédiaire 9 est disposée entre la lampe 8 et la paroi supérieure 1a de la planche de bord 1. Sa face inférieure, irradiée par la lampe 8 est dans ce cas recouverte de la couche 11 du photocatalyseur . Cette paroi intermédiaire 9 est de préférence solidaire de la planche de bord 1 et réalisée en une seule pièce avec elle. Dans ce mode de réalisation des moyens de masquage, les orifices 7 de la paroi supérieure 1a peuvent être réalisés sous la forme d'une multiperforation ou de fentes parallèles.

Lorsque la paroi supérieure 1a se présente sous la forme d'une grille ayant des fentes parallèles, les moyens de masquage des orifices 7 peuvent être constitués par une deuxième grille 12 parallèle à la paroi supérieure 1a et ayant un jeu de fentes 13 parallèles et décalées par rapport aux fentes 7 de la paroi supérieure 1a. Cette grille 12 permet de filtrer les rayons lumineux émis par la lampe 8 sans bloquer la diffusion de l'air d'aération. Le pas des deux jeux de fentes 7 et 13 peut être variable et doit être calculé en fonction de l'incidence des rayons lumineux L. Avec cette architecture, montrée sur la figure 5, la paroi supérieure 1a qui comporte les orifices 7 est recouverte de photocatalyseur sur ses deux faces, et la grille inférieure 12 est recouverte de photocatalyseur sur au moins sa face inférieure.

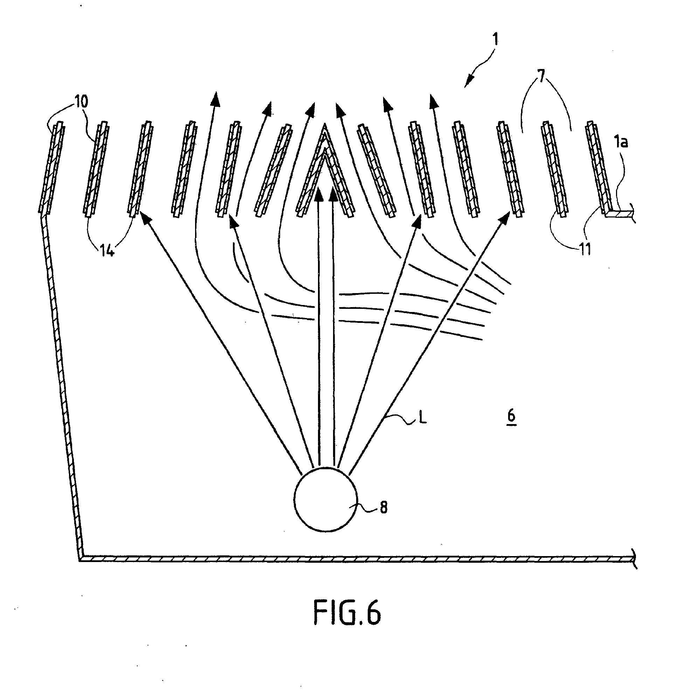

La figure 6 montre un autre mode de réalisation des orifices 7 de la paroi supérieure 1a de la planche de bord 7. Ici la planche de bord 1 comporte une pluralité d'ailettes 14 fixes et inclinées par rapport à l'horizontale. Les orifices 7 de sortie d'air sont formés par les espaces séparant les bords supérieurs des ailettes 14. Les ailettes 14 sont orientées de telle manière que tous les rayons lumineux L émis par la lampe 8 frappent les faces inférieures des ailettes 14 sans possibilité de diffuser par les orifices 7.

Les ailettes 14 sont recouvertes au moins sur leur face inférieure par une couche 11 de photocatalyseur. Leurs faces supérieures peuvent également être recouvertes par une couche 10 de photocatalyseur qui sera irradiée par les rayons ultra-violets ou visibles naturels traversant le pare brise 2.

Les couches 10 et 11 de photocatalyseur peuvent être disposées sur la paroi supérieure 1a, la paroi intermédiaire 9, la grille inférieure 12 et les ailettes 14 de différentes manières suivant la constitution du support.

Dans le cas où le support est métallique ou en matériau plastique, le catalyseur est intégré au support, soit par une peinture, contenant le photocatalyseur, et réalisée de sorte que, d'une part, le photocatalyseur demeure dans sa forme active, au sens de la photocatalyse, après séchage de la peinture, et que, d'autre part, la couleur et la brillance n'engendrent aucun reflet gênant pour le conducteur et les passagers sur le pare-brise, soit par dépôt d'un gel photocatalytique transparent comme décrit dans WO 96/37 280. La peinture et le gel sont chacun déposés soit par trempage, soit par pulvérisation, soit par dépose de couche par un rouleau

II est à noter que dans le cas où la partie supérieure 1a de la planche de bord présente des multiperforations, celles-ci peuvent être réalisées par les mailles d'un tissu obturant une ouverture pratiquée dans la planche de bord 1 au-dessus de la chambre de diffusion 6. Dans ce cas le photocatalyseur et son liant peuvent être déposés par imprégnation du tissu.

Il est également à noter que pour favoriser l'élimination des polluants organiques de l'air de l'habitacle par des rayons ultra-violets ou visibles naturels, il est possible de recouvrir des surfaces intérieures de l'habitacle, autres que le dessus de la planche de bord, par une couche de photocatalyseur. On peut appliquer un photocatalyseur notamment sur les revêtements des portières, la face intérieure du pavillon, la planche arrière et les revêtements des sièges.

## Revendications

1. Procédé pour purifier l'air de l'habitacle d'un véhicule équipé d'une installation (3) de chauffage, aération et/ou climatisation disposée sous la planche de bord (1), procédé selon lequel on irradie un photocatalyseur déposé sur un support par des rayons lumineux, caractérisé par le fait qu'on utilise au moins une partie des garnitures intérieures de l'habitacle comme support du photocatalyseur.

2. Procédé selon la revendication 1, caractérisé par le fait que qu'on utilise au moins la planche de bord (1) comme support du photocatalyseur.

3. Procédé selon la revendication 2, caractérisé par le fait qu'on recouvre au moins la face externe de la planche de bord (1), qui est visible de l'habitacle, d'une couche (10) de photocatalyseur, cette couche étant irradiée au moins par des rayons ultra-violets ou visibles naturels.

4. Procédé selon la revendication 3, caractérisé par le fait qu'on prévoit une installation susceptible de délivrer un débit d'air d'aération à travers une chambre de diffusion (6) disposée sous la planche de bord (1) et communiquant avec l'habitacle par une pluralité d'orifices (7) ménagés dans la paroi de la planche de bord (1).

5. Procédé selon la revendication 4, caractérisé par le fait qu'on recouvre la face interne de la planche de bord (1), qui est située dans la chambre de diffusion (6), d'une couche (11) de photocatalyseur, on dispose une source (8) de rayons ultra-violets dans ladite chambre de diffusion (6) pour irradier le photocatalyseur, et on prévoit des moyens pour masquer les orifices (7) de la paroi de la planche de bord(1) de l'émission des rayons ultra-violets de la source (8).

6. Procédé selon la revendication 5, caractérisé par le fait que l'on masque les orifices (7) par une paroi (9) supplémentaire formant chicane dans la chambre de diffusion (6), ladite paroi (9) étant recouverte d'une couche (11) de photocatalyseur irradiée par les rayons ultra-violets émis par la source (8).

7. Procédé selon la revendication 6, caractérisé par le fait que la paroi (9) supplémentaire comporte des ouvertures (13) décalées par rapport aux orifices (7) de la planche de bord (1).

8. Procédé selon la revendication 5, caractérisé par le fait que la planche de bord (1) comporte une pluralité d'ailettes (14) fixes recouvertes sur leurs deux faces d'une couche (10, 11) de photocatalyseur et orientées de manière à marquer les sorties (7) d'air de l'émission des rayons ultra-violets de la source (8).
